(19) Europäisches Patentamt
European Patent Office
Office européen des brevets

(11) Veröffentlichungsnummer: **0 155 533 B1**

(12) # EUROPÄISCHE PATENTSCHRIFT

(45) Veröffentlichungstag der Patentschrift: **08.11.89**

(51) Int. Cl.⁴: **B 01 D 13/04**

(21) Anmeldenummer: **85101954.7**

(22) Anmeldetag: **22.02.85**

(54) **Membrane aus in wesentlichen unvernetzten organischen Polymeren.**

(30) Priorität: **02.03.84 DE 3407720**

(43) Veröffentlichungstag der Anmeldung: **25.09.85 Patentblatt 85/39**

(45) Bekanntmachung des Hinweises auf die Patenterteilung: **08.11.89 Patentblatt 89/45**

(84) Benannte Vertragsstaaten: **AT BE CH DE FR GB IT LI NL**

(56) Entgegenhaltungen:
**DE-A-2 737 131**
**DE-A-2 855 775**
**DE-A-3 130 040**
**DE-A-3 431 943**
**FR-A-2 417 516**
**US-A-3 872 001**
**US-A-4 073 754**

(73) Patentinhaber: **BASF Aktiengesellschaft, Carl-Bosch-Strasse 38, D-6700 Ludwigshafen (DE)**

(72) Erfinder: **Sterzel, Hans-Josef, Dr., Wasgauring 3, D-6701 Dannstadt-Schauernheim (DE)**
Erfinder: **Sanner, Axel, Dr., Lorscher Ring 2 C, D-6710 Frankenthal (DE)**

**EP 0 155 533 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Gegenstand der Erfindung sind Membrane aus im wesentlichen unvernetzten organischen Polymeren, die komplexbildende Gruppen gebunden enthalten.

Membrane, deren Trennmechanismus von der Porengrösse und der kohäsiven Wechselwirkung mit dem Membranpolymeren bestimmt wird, sind in der Regel nicht besonders selektiv. Dieser Nachteil wurde durch die Entwicklung der Carrier-Membranen, wie sie beispielsweise in der DE-OS 29 10 793 beschrieben sind, behoben. Dort wird ein Carrier in einem dünnen Flüssigkeitsfilm gelöst, der durch Kapilarkräfte in den Mikroporen einer Trägermembran gehalten wird. Solche flüssigen Carrier-Membrane sind jedoch in ihrer Anwendungsbreite begrenzt, da die Carrier-Konzentration ihre Grenze in der Löslichkeit findet und zudem die Membranflüssigkeit einen möglichst niedrigen Dampfdruck und eine möglichst niedrige Viskosität aufweisen muss. Dies gilt umso mehr, als Flüssigkeiten mit niedrigem Dampfdruck in der Regel hohe Viskositäten haben. Aus der DE-OS 27 37 131 sind auch bereits Membrane aus vernetzten Polymeren, die über Seitenketten reaktive Gruppen enthalten, bekannt. Solche Membrane aus vernetzten Polymeren sind hinsichtlich ihrer Verwendungsfähigkeit nachteilig, z.B. nimmt die Selektivität mit dem Vernetzungsgrad ab, und sie lassen sich zudem nur in aufwendiger Weise verarbeiten.

Es war deshalb die technische Aufgabe gestellt, Membrane zur Verfügung zu stellen, mittels deren die Nachteile der Flüssigmembrane behoben werden und die zudem eine gute Permeabilität, Selektivität und Verarbeitbarkeit aufweisen.

Diese Aufgabe wird gelöst durch Membrane aus im wesentlichen unvernetzten Polymeren, die an der Polymerkette an einem aromatischen Strukturelement des Polymeren über einen Alkylenrest in einem Abstand von mindestens 4 Kohlenstoffatomen komplexbildende Gruppen gebunden enthalten, wobei die Membrane als organische Polymere Polystyrol, aromatische Polysulfone, aromatische Polyethersulfone, Polyetherimide, Polyphenylenether oder aromatische Polyetherketone enthalten.

Die neuen Membrane haben den Vorteil, daß die Nachteile der Flüssigmembrane vermieden werden. Ferner haben die neuen Membrane den Vorteil, daß sie sich durch gute Verarbeitbarkeit, Permeabilität und gute Selektivität auszeichnen. Zudem haben die neuen Membrane den Vorteil, daß sie nicht ausgelaugt werden.

Die in den erfindungsgemässen Membranen enthaltenen Polymere sind Polystyrol, aromatische Polysulfone, aromatische Polyethersulfone, Polyetherimide, Polyphenylenether oder aromatische Polyetherketone. Diese weisen in unmodifizierter Form eine Erweichungstemperatur oberhalb 80 °C auf.

Die Polymeren enthalten an einem aromatischen Strukturelement des Polymeren über einen Alkylenrest in einem Abstand von mindestens 4 Kohlenstoffatomen komplexbildende Gruppen gebunden. Die Alkylengruppen können geradkettig oder verzweigt sein und haben vorteilhaft eine Kettenlänge von 6 bis 22 Kohlenstoffatomen, insbesondere von 6 bis 14 Kohlenstoffatomen. Vorteilhaft sind die komplexbildenden Gruppen an der Alkylenkette endständig angeordnet, d.h. sie sind vorteilhaft in einem Abstand von mindestens 6 Kohlenstoffatomen von der Polymerkette gebunden. Vorteilhaft beträgt der Unterschied der Löslichkeitsparameter der Strukturelemente von Polymeren und Seitenketten mindestens 1 Joule $^{1/2}$/cm$^{3/2}$.

Vorteilhafte komplexbildende Gruppen sind beispielsweise tert. Aminogruppen, die abgesehen von der Bindung an den Alkylenrest $C_1$-$C_4$-Alkylgruppen als Substituenten haben und auch in quaternärer Form vorliegen können. Ferner Co(salen)gruppen der Formel

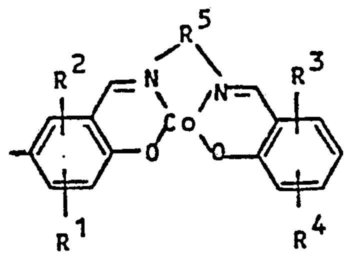

(I)

in der $R^1$, $R^2$, $R^3$ und $R^4$ jeweils für ein Wasserstoffatom, eine Methylgruppe, eine Methoxygruppe, ein Fluoratom oder eine Trifluormethylgruppe stehen und $R^5$ einen Ethylen- oder ortho-Phenylenrest bezeichnet.

Besonders geeignet sind komplexbildende Gruppen wie 8-Hydroxichinolin, 8-Hydroxichinaldin, β-Hydroxianthrachinone wie Chinalicerin, Amidoxime wie Benzamidoxin, α-Hydroxyoxime oder Salicylaldoxim.

Die Konzentration der komplexbildenden Gruppen im Polymeren beträgt vorteilhaft 0,05 bis 5 Äquivalente pro Kilogramm, insbesondere 0,2 bis 2 Äquivalente pro Kilogramm. Die Seitenketten können in den Polymeren sowohl statistisch als auch regelmässig verteilt sein.

Da es sich zeigte, daß die Selektivität bei unvernetzten Polymeren am größten ist, sind völlig unvernetzte Polymere und somit unvernetzte Membrane bevorzugt. Diese bieten zusätzlich den Vorteil, daß sie in geeigneten Lösungsmitteln löslich sind und sich diese Lösungen zum Tränken mikroporöser Trägerfolien oder Hohlfasern sehr gut eignen.

Die erfindungsgemäßen Membrane sind vorteilhaft auf mikroporösen Membranen, die als Mikrofiltrationsmembrane bekannt sind, z.B. aus Polyethylen, Polypropylen oder Polytetrafluorethylen aufgebracht. Dies geschieht durch Tränken einer Mikrofiltrationsmembrane mit einer Lösung der erfindungsgemäßen Polymeren mit komplexbildenden Gruppen und Verdampfen des Lösungsmittels. Die Trägermembrane können flächig in Spiralmodulen oder in Form von Hohlfasern in Hohlfasermodulen angewendet werden.

Die Seitenketten enthaltenden Polymeren können durch Copolymerisation oder durch Cokondensation von mit den erfindungsgemäßen Seitenketten substituierten Monomeren hergestellt werden. Vorteilhaft stellt man jedoch die erfindungsgemäßen Seitenketten enthaltenden Polymeren durch polymeranaloge Umsetzung her. Ein universell anwendbarer Reaktionstyp besteht z.B. in der Einführung einer Ω-Halogenalkankette. Voraussetzung ist hierzu ein aromatischer Rest im Polymeren, dessen Nucleophilie ausreichend gross ist, um einer Friedel-Crafts-Acylierung zugänglich zu sein. Die erfindungsgemäß eingesetzten aufgeführten Polymeren sind hierzu gut geeignet.

Dazu löst man das umzusetzende Polymere in einem geeigneten Lösungsmittel, z.B. 1,2-Dichlorethan, Nitromethan oder 2-Nitropropan und führt eine Friedel-Crafts-Acylierung mit der gewünschten Menge eines Ω-Chlorcarbonsäurechlorids durch. Dabei werden die üblichen Reaktionsbedingungen, nämlich Temperaturen von -10 bis +50 °C in Reaktionszeiten von 2 bis 40 h mit den üblichen Katalysatoren wie Aluminiumchlorid, Zinkchlorid, Zinn(IV)chlorid oder Bortrifluoridetherat in molaren Mengen, eingehalten.

Nach Zersetzen des Katalysator/Polymer-Komplexes wird das Polymere abgetrennt und in einem zweiten Reaktionsschritt die Ketogruppe durch Reduktion mit Hydrazin in alkalischem Triglykol zur Methylengruppe reduziert. Anschließend führt man eine Behandlung mit Thionylchlorid durch, um sicherzustellen, daß die durch Hydrolyse entstandenen Hydroxylgruppen wieder durch Chloratome ersetzt werden.

Die Reduktion der Ketogruppe zur Methylengruppe kann in schonender Weise auch durch katalytische Hydrierung unter Anwesenheit von Platin-Metall-Katalysatoren bei Wasserstoffdrücken bis 300 bar erfolgen.

Während die polymeranaloge Reaktion am gelösten Polymeren gewöhnlich zur statistischen Verteilung der Seitenketten führt, gelingt es durch Reaktionen am ungelösten gequollenen teilkristallinen Polymeren Multiblockcopolymere sehr regelmäßiger Struktur zu erhalten. In diesem Fall sind nur die amorphen Bereiche der teilkristallinen Polymere der Reaktion zugänglich. Besonders wenn hohe mechanische Festigkeiten und Chemikalienbeständigkeit bei hohen Temperaturen gefordert sind, kann diesen Anforderungen mit Blockstrukturen mit hohen kristallinen Anteilen entsprochen werden.

Die komplexbildenden Gruppen werden durch Umsetzung mit der Ω-Alkangruppe an die Seitenketten gebunden. So entsteht durch die Reaktion mit Iminodiessigsäurediethylester die sehr gut chelatisierende Iminodiessigsäuregruppe als komplexbildende Gruppe.

Durch Umsetzen mit Kaliumcyanid in Dimethylsulfoxid erhält man die Ω-Cyanogruppe. Diese kann mit Hydroxylamin zu Amidoximen umgesetzt werden. Eine Reihe weiterer Möglichkeiten zur Einführung geeigneter Komplexbildner sind beschrieben in Separation Science and Technology, Band 18, 4, 1983, Seiten 307–339. Chelatbildende Komplexe wie Oxichinolin werden vorteilhaft unter milden Bedingungen über eine Friedel-Crafts-Alkylierung mit der Seitenkette verbunden.

Die erfindungsgemäßen Membrane eignen sich für die Anreicherung von Metallionen in der Hydrometallurgie oder zur Abreicherung von Metallionen in industriellen Abwässern. Ferner können Nitrationen aus Trinkwasser entfernt werden, falls α-Dinaphtodimethylamin als komplexbildende Gruppe verwendet wird. Bei Verwendung der Co(salen)gruppe als komplexbildende Gruppe kann beispielsweise selektiv Sauerstoff aus Luft abgetrennt werden.

Der Gegenstand der Erfindung sei im folgenden Beispiel veranschaulicht:

Beispiel

Nach dem beschriebenen Reaktionsweg wurde an Polyethersulfon, aufgebaut aus Einheiten der Formel

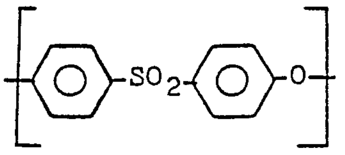

(relative Viskosität des Ausgangsmaterials 1,7, gemessen als 1%ige Lösung in N-Methylpyrrolidon bei 25 °C) durch Umsetzen mit 12-Chlordodecansäurechlorid und anschließende Reduktion der Carbonylgruppe eine 12-Chlordodecanseitengruppe eingeführt. Das so erhaltene Polymere enthielt 0,36 Äquivalente Chlor pro kg. Anschließend wurde das Polymere in Nitromethan gelöst und in Gegenwart von Aluminiumchlorid bei 20 °C über 24 h mit einem doppelten molaren Überschuss 8-Hydroxy-Chinolin umgesetzt. Durch Ausfällen des Reaktionsproduktes in Methanol und dreimaligem wiederholten Lösen in Nitromethan und Fällen in Methanol wurde das Polymere gereinigt.

Durch Titration einer Lösung des Polymeren in Gegenwart von Kaliumiodid/Stärke mit einer Kupfer(II)-sulfatlösung wurde der Gehalt an 8-Hydroxi-Chinolingruppen bestimmt. Er betrug 0,32 Äquivalente/kg.

In eine 1%ige Lösung des Polymeren in Nitromethan wurde eine mikroporöse Trägermembran aus Polypropylen eingetaucht. Nach Ablaufen der überschüssigen Lösung wurde die Membran langsam getrocknet. Die Leistungsfähigkeit dieser Membran wurde wie folgt gemessen. Die Membran wurde mit Hilfe einer am Umfang umlaufenden Gummidichtung in eine Meßzelle gespannt, die durch die Membran in zwei Kammern geteilt wurde. Die freie Membranfläche betrug 112 $cm^2$, das Volumen jeder Kammer betrug ca. 140 $cm^3$. Durch die Eingangskammer wurden ca. 10 Liter einer Lösung mit 100 ppm $Cu^{2+}$-Ionen mit einem pH-Wert von 2,5 gepumpt. Durch die andere Kammer wurde eine Lösung mit 6 Gew.% $Cu^{2+}$ gepumpt, die durch Schwefelsäurezusatz auf einemn pH-Wert von 0,5 bis 1,0 gehalten wurde. Bei Raumtemperatur betrug die Permeabilität $1.10^{-8}$ Mol $Cu^{2+}$/$cm^2$.sec, wobei $Cu^{2+}$-Ionen in die konzentriertere Lösung permeierten.

Vergleichsbeispiel

In einem Vergleichsversuch wurde die mikroporöse Trägermembran mit einer 10 gew.%igen Lösung 8-Hydroxichinolin, das eine lineare Dodecanseitenkette trägt, in Kerosin getränkt. Unter vergleichbaren Bedingungen betrug die Permeabilität nur $2.10^{-9}$ Mol $Cu^{2+}$/$cm^2$.sec.

1. Membrane aus im wesentlichen unvernetzten organischen Polymeren, die an der Polymerkette in einem Abstand von mindestens 4 Kohlenstoffatomen komplexbildende Gruppen gebunden enthalten, dadurch gekennzeichnet, daß die Membrane als organische Polymere Polystyrol, aromatische Polysulfone, aromatische Polyethersulfone, Polyetherimide, Polyphenylenether oder aromatische Polyetherketone enthalten und die komplexbildenden Gruppen über eine Alkylengruppe mit mindestens 4 C-Atomen an aromatische Strukturelemente des Polymeren gebunden sind.

2. Membrane nach Anspruch 1, dadurch gekennzeichnet, daß die organischen Polymeren chelatbildende Gruppen gebunden enthalten.

3. Membrane nach den Ansprüchen 1 und 2, dadurch gekennzeichnet, daß die komplexbildende Gruppe eine tertiäre Aminogruppe, eine Co(salen)gruppe der allgemeinen Formel I

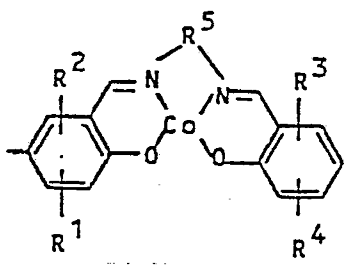

(I)

in der $R^1$, $R^2$, $R^3$ und $R^4$ jeweils für ein Wasserstoffatom, eine Methylgruppe, eine Methoxygruppe, ein Fluoratom oder eine Trifluormethylgruppe stehen und $R^5$ einen Ethylen- oder ortho-Phenylenrest bezeichnet, 8-Hydroxichinolin oder 8-Hydroxichinaldin ist oder sich herleitet von β-Hydroxianthrachinonen wie Chinalizerin, Amidoximen wie Benzamidoxim, α-Hydroxyoximen oder Salicylaldoxim.

4. Membrane nach den Ansprüchen 1 bis 3, dadurch gekennzeichnet, daß die komplexbildenden Gruppen in einem Abstand von mindestens 6 Kohlenstoffatomen gebunden sind.

5. Membrane nach den Ansprüchen 1 bis 4, dadurch gekennzeichnet, daß die komplexbildenden Gruppen in einer Menge von 0,05 bis 5 Äquivalente je kg Polymer enthalten sind.

6. Membrane nach den Ansprüchen 1 bis 5, dadurch gekennzeichnet, daß sie auf mikroporöse Trägermembrane aufgebracht sind.

**Claims**

1. A membrane compound of a substantially non-crosslinked organic polymer which contains complex-forming groups bonded to the polymer chain at intervals of not less than 4 carbon atoms, wherein the organic polymer is a polystyrene, an aromatic polysulfone, an aromatic polyether-sulfone, a polyetherimide, a polyphenylene ether or an aromatic polyether-ketone and the complex-forming groups are bonded to aromatic structural elements of the polymer via an alkylene group of not less than 4 carbon atoms.

2. A membrane as claimed in claim 1, wherein the organic polymer contains bonded chelate-forming groups.

3. A membrane as claimed in either of claims 1 and 2, wherein the complex-forming group is a tertiary amino group, a Co(salene) group of the general formula I

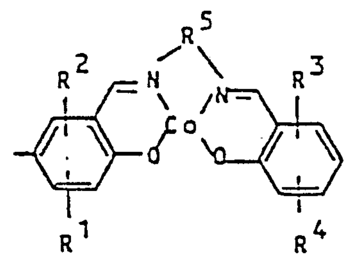

(I)

where $R^1$, $R^2$, $R^3$ and $R^4$ are each hydrogen, methyl, methoxy, fluorine or trifluoromethyl and $R^5$ is ethylene or ortho-phenylene, or is 8-hydroxyquinoline or 8-hydroxyquinaldine, or is derived from β-hydroxyanthraquinones such as quinalizorine, amidoximes such as benzamidoxime, α-hydroxyoximes or salicyladoxime.

4. A membrane as claimed in any of claims 1 to 3, wherein the complex-forming groups are bonded at intervals of not less than 6 carbon atoms.

5. A membrane as claimed in any of claims 1 to 4, which contains from 0.05 to 5 equivalents of complex-forming groups per kg of polymer.

6. A membrane as claimed in any of claims 1 to 5, applied to a micro-porous carrier membrane.

**Revendications**

1. Membranes en polymères organiques essentiellement non réticulés, sur la chaîne polymère desquels sont liés à une distance d'au moins quatre atomes de carbone des groupes complexants, caractérisées en ce que les polymères organiques contenus dans les membranes sont des polystyrènes, des polysulfones aromatiques, des polyéthersulfones aromatiques, des polyétherimides, des poly(éthers de phénylène) ou des polyéther-cétones aromatiques, et les groupes complexants sont liés par un groupe alkylène comportant au moins quatre atomes de carbone à des éléments de structure aromatiques du polymère.

2. Membranes suivant la revendication 1, caractérisées en ce que les polymères organiques comprennent des groupes chélatants, qui y sont fixés.

3. Membranes suivant les revendications 1 et 2, caractérisées en ce que le groupe complexant est un groupe amine tertiaire, un groupe Co(salen) de la formule I

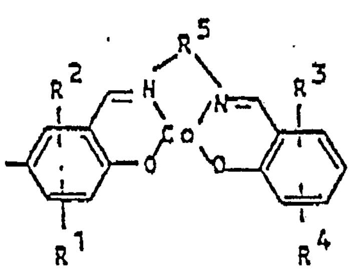

(I)

dans laquelle $R^1$, $R^2$, $R^3$ et $R^4$ désignent respectivement un atome d'hydrogène, un radical méthyle, un groupe méthoxy, un atome de fluor ou un groupe trifluorométhyle, et $R^5$ représente un groupe éthylène ou orthophénylène, l'hydroxy-8 quinoléine ou l'hydroxy-8 quinaldine, ou est dérivé d'une β-hydroxyanthraquinone telle que la quinalizérine, d'une amidoxime telle que la benzamid-oxime, les α-hydroxyoximes ou la salicylaldoxime.

4. Membranes suivant les revendications 1 à 3, caractérisées en ce que les groupes complexants sont fixés à une distance d'au moins six atomes de carbone.

5. Membranes suivant les revendications 1 à 4, caractérisées en ce que la proportion des groupes complexants est de 0,05 à 5 équivalents par kg de polymère.

6. Membranes suivant les revendications 1 à 5, caractérisées en ce qu'elles sont déposées sur des membranes supports microporeuses.